# EUROPEAN PATENT SPECIFICATION

(11) **EP 0 449 094 B1**
(45) Date of publication and mention of the grant of the patent: **09.11.1994**
(21) Application number: 91104328.9
(22) Date of filing: 20.03.1991
(51) Int. Cl.: A21B 1/26, A21B 1/40

(54) **Convection oven with reduced-power heat exchanger**
Konvektionsofen mit mit reduzierter Leistung arbeitendem Wärmetauscher
Four de circulation avec échangeur de chaleur à puissance réduite

(30) Priority: 22.03.1990 IT 1976190
(43) Date of publication of application: 02.10.1991
(73) Proprietor: CURTI S.r.l, I-20090 Lodivecchio (prov.of Milan) (IT)
(72) Inventor: Sartorato, Giovanni, I-20017 RHO (Prov. of Milan) (IT)
(74) Representative: Modiano, Guido, Dr.-Ing.

(56) References cited:
- DE-A- 3 508 747
- FR-A- 1 549 437
- FR-A- 2 531 839

## Description

The present invention relates to a convection oven with a reduced-power heat exchanger.

As is known, ovens in general, and bread- and pastry-baking ovens in particular, have a heating system which comprises a baking or treatment compartment or chamber into which hot air, fed by a heat exchanger, is introduced. The air in the baking chamber is drawn and sent, by means of a fan, back to the heat exchanger in order to be heated again, thus continuing the heating cycle until the required temperature is reached and maintained in the baking chamber.

A thermoregulation device is generally provided and disconnects the heating system of the heat exchanger, which can be, according to the various instances, a burner or a battery of resistors.

As is evident, particularly for an electrically operated system, it is necessary to have the availability of the required power when the temperature in the compartment to be heated drops below the preset level, and the faster it is necessary to rapidly return to the set temperature and the larger the mass of the material to be treated or baked and which must be inserted in the baking chamber, the higher said power becomes.

Accordingly, especially with electrically heated ovens, there is a considerable engagement of electric power, which can create problems and high costs both in the preparation of the electric supply system in the location in which the oven must operate and due to the higher costs arising from the greater engagement of electric power.

Another disadvantage which can be ascribed to the solutions of the known art consists in that the thermoregulation of the baking chamber always has cyclic variations which are determined by the fact that the exchanger is adjusted by means of the on-off system, so that thermal inertia may occur and not allow to correctly maintain the optimum thermal conditions.

Known from DE-A-3 508 747 is an oven comprising a baking chamber with two lateral air channels separated from the baking chamber by perforated walls and alternatively fed with warm air from a fan by means of a commutation device, wherein the air is heated by a heat exchanger, passed through the air channels in the baking chamber, in alternate directions, and then drawn again to the heat exchanger; a by-pass circuit is provided for the circulation of the warm air when the door of the baking chamber is open, whereby the warm air flows through the two air channels without entering in the baking chamber.

The aim of the invention is indeed to eliminate the above described disadvantages by providing a convection oven with a reduced-power heat exchanger, which allows to perform the thermoregulation of the baking chamber with a proportional criterion, consequently obtaining a markedly improved regulation level with respect to the systems of the known art.

Within the scope of the above aim, a particular object of the invention is to provide an oven wherein it is possible to use a resistor exchanger with a considerably reduced installed power, without thereby reducing the productive potentiality of said oven.

Another object of the present invention is to provide an oven wherein the heat exchanger allows in practice to accumulate heat, constituting a thermal buffer capable of bringing the thermal characteristics of the oven into better uniformity.

Not least object of the present invention is to provide an oven which can be easily obtained starting from commonly commercially available elements and materials and is furthermore advantageous from a merely economical point of view.

This aim, these objects and others which will become apparent hereinafter are achieved by a convection oven with a heat exchanger operated with reduced power, according to the invention, as defined in Claim 1.

Further characteristics and advantages will become apparent from the description of a preferred but not exclusive embodiment of a convection oven with reduced-power heat exchanger, illustrated only by way of non-limitative example in the accompanying drawings, wherein:
figure 1 is a schematic perspective view of a possible embodiment of the oven;
figure 2 is a sectional view of the oven, with the air circulation flowing completely through the heat exchanger;
figure 3 is a view of a detail of the heat exchanger with the throttling of the air flow which passes inside said heat exchanger.

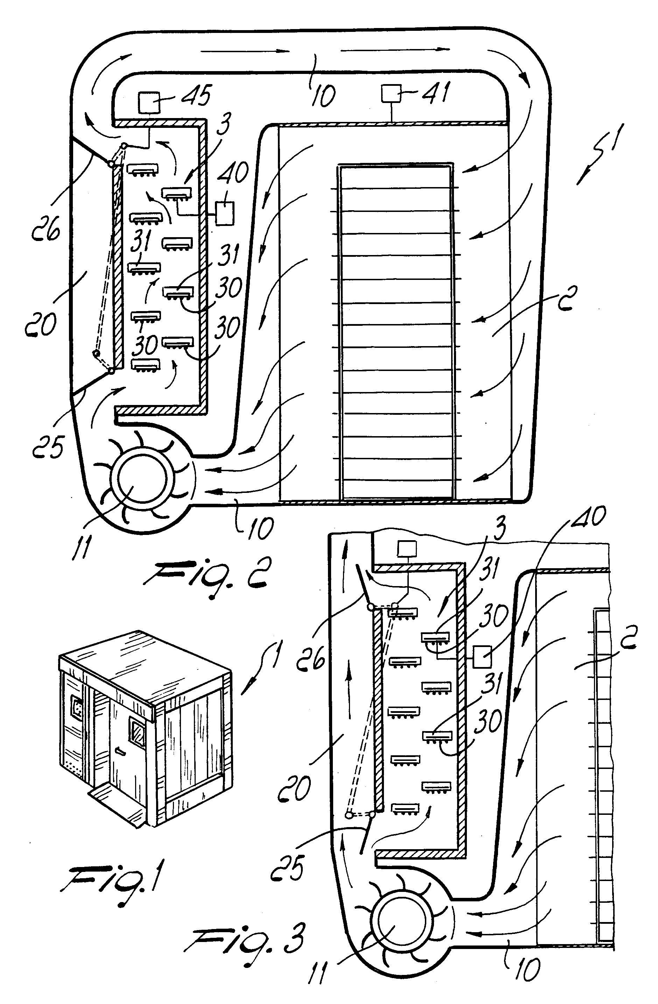

With reference to the above figures, the convection oven with a reduced-power heat exchanger, according to the invention, which is generally indicated by the reference numeral 1, comprises a baking chamber 2 which can assume any configuration deemed appropriate, and a heat exchanger 3 which advantageously is of the electrically heated type, as will become apparent hereinafter.

The heat exchanger and the oven are mutually connected by means of air circulation channels, generally indicated by 10, wherein a fan 11 acts and draws the air from the baking chamber to feed it into the heat exchanger.

The peculiarity of the invention resides in the fact that it comprises an air circulation duct, indicated by 20, which is arranged in parallel with respect to the heat exchanger 3.

An inlet shutter 25 and an outlet shutter 26 are provided at the inlet and at the outlet of said heat exchanger and of said air circulation duct, and have the function of throttling the flow which enters the heat exchanger so as to obtain a precise thermoregulation, as will become apparent hereinafter.

Another important aspect of the invention is furthermore constituted by the fact that the heat exchanger comprises electric resistors 30 which are arranged at masses 31 with a high thermal capacity, which in practice have the function of ensuring an adequate reserve of heat for the correct baking or treatment process.

Advantageously, the resistors 30 have a surface portion which can be affected directly by the flow of air to perform an adequate heating of the air even if the masses 31 are at a relatively low temperature.

The oven furthermore comprises a first thermoregulation device 40 which controls the temperature of the heat exchanger and activates the connection and disconnection of the resistors; it is also possible to provide a plurality of thermoregulation devices which control the various groups of masses 31 and of the related resistors 30. A second thermoregulation device 41 is furthermore provided, is installed in the baking chamber 2, and in practice actuates the shutters 25 and 26 by means of a servomotor 45 which can be of the proportional type and thus ensures an optimum regulation level which in any case is higher than that of the on-off system with which these units are generally provided.

In practical operation, the adoption of masses with high thermal capacity arranged inside the heat exchanger allows in practice to separate the moment in which heat is required from the moment in which the heating energy is supplied, thus allowing to considerably reduce the installed electric power, both for the heat exchanger and for the entire system in which it is included, by virtue of the possibility of using power when the demands of the other devices are low.

Furthermore, by virtue of the throttling system, it is possible to keep the heat exchanger at a temperature in excess of the one required in the baking chamber, so as to be able to immediately supply heat and reintegrate the conveyed heat at the time which is most favorable for the system.

By means of the described arrangement, the installed power is reduced by more than 60%, since it is evident that the resistors can have dimensions adequate for a power only slightly above the average consumption value of the system.

This also provides the advantage of heating the heat exchanger when power is not required by other devices.

By means of the described arrangement it is thus possible, first of all, to always have precise heat levels inside the baking chamber, since the throttling of the air flow on the heat exchanger allows to constantly draw the required amount of heat.

The presence of the masses with high thermal capacity inside the heat exchanger furthermore provides a thermal buffer which is capable of "accumulating" heat and can supply it in all those moments of the baking cycle in which, for example, there is the need for high heat additions. Thus, for example, it is possible to program operation so as to have higher heat additions at preset times, such as during the opening of the door in order to introduce the material to be treated or baked.

The invention thus conceived is susceptible to numerous modifications and variations, all of which are within the scope of the inventive concept. Thus, for example, it is possible to exploit the same solution idea in the manufacture of refrigeration cells, for which the heat exchanger obviously becomes a refrigeration-unit generator.

All the details may furthermore be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Convection oven with a heat exchanger operated with reduced power, comprising a baking chamber (2) and a heat exchanger (3) which are mutually connected by means of air circulation channels (10), and a fan (11) which draws air from said baking chamber (2) characterized in that said oven further comprises an air circulation duct (20) defined between a side wall of said oven and said heat exchanger, a lower shutter (25) and an upper shutter (26) being provided for controlling the distribution of the air drawn from the baking chamber and delivered by said fan (11) in parallel between said heat exchanger (3) and said air circulation duct (20), said lower shutter (25) being provided at the inlet of the heat exchanger (3) and of said air circulation duct (20) and said upper shutter being provided at the outlet of said heat exchanger (3) and of said air circulation duct (20), masses (31) with high thermal capacity being provided inside said heat exchanger (3).

2. Oven according to claim 1, characterized in that it comprises a servomotor(45) which actuates said shutters (25, 26) and is driven by a thermoregulation unit (41) which acts in said baking chamber (2).

3. Oven according to Claim 1 or 2, characterized in that said lower shutter (25) and said upper shutter (26) which are provided respectively at said inlets and at said outlets can move concordantly with respect to one another.

4. Oven according to one or more of the preceding claims, characterized in that said heat exchanger (3) has a heat source constituted by electric resistors (30) arranged at masses (31) with high thermal capacity.

5. Oven according to one or more of the preceding claims, characterized in that said electric resistors (30) have at least one surface portion suitable for being affected directly by the air flow.

6. Oven according to one or more of the preceding claims, characterized in that it comprises at least one first thermoregulation device (40) which controls the temperature of said heat exchanger (3) independently of the temperature in said baking chamber (2).

## Patentansprüche

1. Konvektionsofen mit einem Wärmetauscher, der mit reduzierter Leistung betrieben wird, mit einer Backkammer (2) und einem Wärmetauscher (3), die beiderseitig mittels Luftzirkulationskanälen (10) verbunden sind, und mit einem Gebläse (11), das Luft aus der Backkammer (2) zieht, **dadurch gekennzeichnet**, daß der Ofen ferner aufweist eine Luftzirkulationsleitung (20), die zwischen einer Seitenwand des Ofens und dem Wärmetauscher gebildet ist, einen unteren Verschluß (25) und einem oberen Verschluß (26), die vorgesehen sind, um die Verteilung der von der Backkammer gezogenen Luft, die mittels des Gebläses (11) parallel zwischen dem Wärmetauscher (3) und der Luftzirkulationsleitung (20) ausgegeben wird, zu regeln, wobei der untere Verschluß (25) am Einlaß des Wärmetauschers (3) und der Luftzirkulationsleitung (20) vorgesehen ist und der obere Verschluß am Auslaß des Wärmetauschers (3) und der Luftzirkulationsleitung (20) vorgesehen ist, sowie Massen (31) mit hoher Wärmekapazität innerhalb des Wärmetauschers (3) vorgesehen sind.

2. Ofen nach Anspruch 1, **dadurch gekennzeichnet**, daß er einen Servomotor (45) aufweist, der die Verschlüsse (25, 26) betätigt und mittels einer Wärmereglereinheit (41) angesteuert wird, die in der Backkammer (2) wirksam ist.

3. Ofen nach Anspruch 1 oder 2, **dadurch gekennzeichnet**, daß der untere Verschluß (25) und der obere Verschluß (26), die einerseits an den Einlässen und andererseits an den Auslässen vorgesehen sind, sich zueinander übereinstimmend bewegen können.

4. Ofen nach einem oder mehreren der vorstehenden Ansprüche, **dadurch gekennzeichnet**, daß der Wärmetauscher (3) eine Wärmequelle hat, die durch elektrische Widerstände (30) gebildet ist, die bei den Massen (31) mit der hohen Wärmekapazität angeordnet sind.

5. Ofen nach einem oder mehreren der vorstehenden Ansprüche, **dadurch gekennzeichnet**, daß die elektrischen Widerstände (30) mindestens einen Oberflächenabschnitt aufweisen, der geeignet ist, unmittelbar durch den Luftstrom beeinflußt zu werden.

6. Ofen nach einem oder mehreren der vorstehenden Ansprüche, **dadurch gekennzeichnet**, daß er mindestens eine erste Wärmereguliervorrichtung (40) aufweist, die die Temperatur des Wärmetauschers (3) unabhängig von der Temperatur innerhalb der Backkammer (2) regelt.

## Revendications

1. Four de circulation avec un échangeur de chaleur actionné à puissance réduite, comprenant une chambre de cuisson (2) et un échangeur de chaleur (3) qui sont reliés l'un à l'autre au moyen de canaux de circulation d'air (10), et un ventilateur (11) qui aspire l'air de ladite chambre de cuisson (2), caractérisé en ce que ledit four comprend également un conduit de circulation d'air (20) défini entre une paroi latérale du dit four et ledit échangeur de chaleur, une trappe inférieure (25) et une trappe supérieure (26) étant prévues pour contrôler la distribution de l'air aspiré depuis la chambre de cuisson et délivré par ledit ventilateur (11) en parallèle entre ledit échangeur de chaleur (3) et ledit conduit de circulation d'air (20), ladite trappe inférieure (25) étant prévue à l'entrée du dit échangeur de chaleur (3) et du dit conduit de circulation d'air (20) et ladite trappe supérieure (26) étant prévue à la sortie du dit échangeur de chaleur (3) et du dit conduit de circulation d'air (20, des charges (31) à haute capacité thermique étant prévues à l'intérieur du dit échangeur de chaleur (3).

2. Four selon la revendication 1, caractérisé en ce qu'il comprend un moteur de commande (45) qui actionne lesdites trappes (25,26) et est entraîné par une unité de thermorégulation (41) qui agit dans ladite chambre de cuisson (2).

3. Four selon la revendication 1 ou 2, caractérisé en ce que ladite trappe inférieure (25) et ladite trappe supérieure (26) qui sont prévues respectivement à ladite entrée et à ladite sortie peuvent se déplacer de façon concordante l'une par rapport à l'autre.

4. Four selon l'une quelconque des revendications précédentes, caractérisé en ce que ledit échangeur de chaleur (3) a une source de chaleur constituée de résistances électriques (30) disposées sur les charges (31) à haute capacité thermique.

5. Four selon l'une quelconque des revendications précédentes, caractérisé en ce que lesdites résistances électriques (30) ont au moins une partie de leur surface qui peut être affectée directement par le courant d'air.

6. Four selon l'une quelconque des revendications précédentes, caractérisé en ce qu'il comprend au moins un premier dispositif de thermorégulation (40) qui contrôle la température du dit échangeur de chaleur (3) indépendamment de la température dans ladite chambre de cuisson (2).
